# EUROPEAN PATENT APPLICATION

(11) **EP 4 454 804 A1**
(43) Date of publication of application: **30.10.2024**
(21) Application number: 22911875.7
(22) Date of filing: 20.12.2022
(51) Int. Cl.: B23K 31/02, B23K 35/30, B23K 9/16, B23K 9/18, B23K 11/16, B23K 101/04

(54) **MANUFACTURING METHOD FOR WELDED STEEL PIPE HAVING SUPERIOR WEAR RESISTANCE**

(30) Priority: 21.12.2021 KR 20210184252
(71) Applicant: POSCO Co., Ltd, Pohang-si, Gyeongsangbuk-do 37859 (KR)
(72) Inventor: LEE, Sang-Chul, Pohang-si, Gyeongsangbuk-do 37877 (KR)
(74) Representative: Meissner Bolte Partnerschaft mbB
(86) International application number: PCT/KR2022/020871
(87) International publication number: WO 2023/121242

(57) **Abstract**

An aspect of the present invention may provide a method for manufacturing a welded steel pipe which has superior wear resistance and thus is suitable to deliver a slurry.

## Description

### Technical Field

The present disclosure relates to a method for manufacturing a welded steel pipe, and more specifically, a method for manufacturing a welded steel pipe having superior wear resistance by optimizing a steel composition and a microstructure in materials of the steel pipe, and conditions for manufacturing the steel pipe.

### Background Art

Components and structures used under the wear-resistant environment need regular inspection and replacement to ensure work safety, work soundness, etc. In order to inspect and replace such components and structures, an operation of an industrial facility should temporarily stop, so frequent inspection and replacement of components and structures leads to lower productivity and economic feasibility. Therefore, various attempts have been made to extend the lifespans of components and structures used in wear-resistant environments, and various studies are being actively conducted to improve wear resistance of a material itself constituting the components and the structures.

As the mining, oil, and gas industries grow, wear of welded steel pipes used in mining, transportation, refining, and storage processes has emerged as a major problem. On the other hand, although development of oil sands has recently begun in earnest, it may be known that welded steel pipes formed of API-standard steel materials commonly used in the oil and gas industries do not secure a level of wear resistance that may deliver a slurry containing oil, rock, gravel, and sand for a long time. Therefore, there is an urgent need for research into welded steel pipes for slurry pipes with superior wear resistance.

### Summary of Invention

### Technical Problem

An aspect of the present disclosure is to provide a method for manufacturing a welded steel pipe having superior wear resistance and suitable for delivering a slurry.

An object of the present disclosure is not limited to the above. Those skilled in the art will have no difficulty in understanding additional problems of the present disclosure from the overall contents of the present specification.

### Solution to Problem

A method for manufacturing a welded steel pipe having superior wear resistance, according to an aspect of the present disclosure, includes cutting a prepared austenite-based steel sheet; beveling both end portions of a cut austenite-based steel sheet; molding a beveled austenite-based steel sheet to have a tubular shape such that both beveled end portions form a butted portion; and welding the butted portion to provide the welded steel pipe.

The austenite-based steel sheet may include, by weight, C: 0.5 to 1.2%, Si: 0.1 to 1.0%, Mn: 12 to 28%, Cr: 6.0% or less (including 0%), P: 0.025% or less, S: 0.025% or less, a balance of Fe, and inevitable impurities, wherein surface hardness of the austenite-based steel sheet may satisfy the following relational expression 1: 18.7*[Mn] - 10.3*[Cr] + 1.7*[C] ≤ Surface Hardness (Hv) ≤ 22.1*[Mn] + 18.3*[Cr] + 2.4*[C]
where, [Mn], [Cr], and [C] are amounts (% by weight) of Mn, Cr, and C, included in the steel sheet, respectively, and, when a component thereamong is not included, brackets including the component are substituted with zero (0).

The beveled austenite-based steel sheet may include austenite having 80% by area or more as a microstructure, and wherein an average grain size of the austenite is 60 um or less.

The beveled austenite-based steel sheet may include a twin of 20% by area or less, and wherein an average size of the twin may be 400 nm or less.

The molding a beveled austenite-based steel sheet molding method may be one selected from a spiral molding process, a UOE press process, a roll bending process, and a JCO molding process.

The welding the butted portion may be at least one arc welding process selected from a shield metal arc welding (SMAW) process, a gas metal arc welding (GMAW) process, a gas tungsten arc welding (GTAW) process, a flux coated arc welding (FCAW) process, and a sub-merged arc welding (SAW) process, or an electric resistance welding (ERW) process.

The butted portion may be welded with a heat input amount of 4.3kJ/mm or less.

Means for solving the above problems does not list all features of the present disclosure, and various features of the present disclosure and advantages and effects thereof will be understood in more detail with reference to specific embodiments and embodiments below.

### Advantageous Effects of Invention

According to an aspect of the present disclosure, a method for manufacturing a welded steel pipe having superior wear resistance and suitable for delivering a slurry may be provided.

Effects of the present disclosure are not limited to the above, and may be construed as including matters reasonably inferred from matters described by those skilled in the art.

### Best Mode for Invention

The present disclosure relates to a method for manufacturing a welded steel pipe having superior wear resistance, and hereinafter, preferred embodiments of the present disclosure will be described. Embodiments of the present disclosure may be modified in various forms, and the scope of the present disclosure should not be construed as being limited to embodiments described below. The present embodiments may be provided to describe the present disclosure in more detail to those skilled in the art to which the present disclosure pertains.

Hereinafter, an austenite-based steel sheet used for manufacturing a welded steel pipe of the present disclosure will be described in more detail. Hereinafter, unless specifically described, % described in relation to an amount of a steel composition is based on a weight, and % described in relation to a fraction of a microstructure is based on an area.

An austenite-based steel sheet according to an aspect of the present disclosure may include, by weight, C: 0.5 to 1.2%, Si: 0.1 to 1.0%, Mn: 12 to 28%, Cr: 6.0% or less (including 0%), P: 0.025% or less, S: 0.025% or less, a balance of Fe, and inevitable impurities.

### Carbon (C): 0.5 to 1.2%

Carbon (C) may be a component that effectively contributes to securing strength of steel and improving wear resistance of steel. In addition, carbon (C) may be a component that improves curing ability of the steel, and effectively contributes to stabilization of austenite. In the present disclosure, to improve strength and austenite safety of a welded joint portion as well as a base material of a welded steel pipe, an amount of carbon (C) included in an austenite-based steel sheet is limited to a range of 0.5% or more. More preferably, the amount of carbon (C) is 0.6% or more, and more preferably, the amount of carbon (C) is 0.7% or more. When carbon (C) is excessively added, a large amount of carbides may be precipitated, and thus wear resistance and elongation of the steel may decrease, and thus, the present disclosure may limit an upper limit of the amount of carbon (C) to 1.2%.

### Silicon (Si): 0.1 to 1.0%

Silicon (Si) may be a component that not only acts as a deoxidizing agent but also effectively contributes to improving strength of steel by solid solution enhancement. Therefore, an austenite-based steel sheet of the present disclosure may include 0.1% or more of silicon (Si) to achieve the above effects. A preferred lower limit of an amount of silicon (Si) is 0.15%, and a more preferred lower limit of the amount of silicon (Si) is 0.2%. However, since silicon (Si) may be a component that adversely affects high temperature formability and low temperature formability, the present disclosure may limit an upper limit of the amount of silicon (Si) to 1.0%. A preferred upper limit of the amount of silicon (Si) is 0.9%, and a more preferred upper limit of the amount of silicon (Si) is 0.8%.

### Manganese (Mn): 12 to 28%

Manganese (Mn) may be a component that effectively contributes to stabilization of austenite, and may effectively improve strength, impact toughness, and wear resistance while increasing a processing hardening degree of steel. In addition, manganese (Mn) may be a component that effectively contributes to the non-magnetic maintenance after processing the steel, and may be also a component capable of effective desulfurization because sulfur (S) in the steel combines to form MnS. An austenite-based steel sheet of the present disclosure may include 12% or more of manganese (Mn) to achieve the above effects. When manganese (Mn) is excessively added, an increase in manufacturing costs is inevitable and corrosion resistance of the steel may be deteriorated. Therefore, the present disclosure may limit an upper limit of an amount of manganese (Mn) to 28%. A preferred upper limit of the amount of manganese (Mn) is 26%, and a more preferred upper limit of the amount of manganese (Mn) is 24%.

### Chromium (Cr): 6.0% or less (including 0%)

Chromium (Cr) may be a ferrite stabilizing element, and may have an advantage of lowering an amount of an austenite stabilizing element, as chromium (Cr) is added. In addition, since chromium (Cr) may be a key component in generation of carbides such as MC or M₂₃C₆, a higher level of precipitation hardening may be obtained, when a certain amount or more of chromium (Cr) is added. In addition, since chromium (Cr) may be a strong anti-oxidation component, corrosion resistance of steel may be effectively improved when a certain level of chromium (Cr) is added. An austenite-based steel sheet of the present disclosure may include chromium (Cr) to achieve the above effects. A preferred lower limit of an amount of chromium (Cr) is 0.5%, and a more preferred lower limit of the amount of chromium (Cr) is 1.0%. When chromium (Cr) is excessively added, a coarse grain boundary carbide may be formed, resulting in a decrease in wear resistance, and thus, an upper limit of the amount of chromium (Cr) of the austenite-based steel sheet of the present disclosure may be limited to 6.0%. A preferred upper limit of the amount of chromium (Cr) is 5.0%, and a more preferred upper limit of the amount of chromium (Cr) is 4.0%.

### Phosphorus (P): 0.025% or less (including 0%)

Phosphorus (P) may be an impurity that is inevitably introduced during a steel manufacturing process, and may be a component that has a high possibility of causing secondary segregation. Therefore, it is preferable to suppress an amount of addition as much as possible. Theoretically, a most preferable amount of phosphorus (P) is 0%, but controlling an amount of phosphorus (P) added to 0% causes an excessive process load, and in the present disclosure, an upper limit is limited to 0.025% in consideration of the amount of phosphorus (P) to be inevitably added.

### Sulfur (S): 0.025% or less (including 0%)

Sulfur (S) may be also an impurity that is inevitably introduced during a steel manufacturing process, and may be a component that promotes high-temperature cracks during welding. Therefore, it is preferable to suppress an amount of addition as much as possible. Theoretically, a most preferable amount of sulfur (S) is 0%, but controlling an amount of sulfur (S) added to 0% causes an excessive process load, and in the present disclosure, an upper limit is limited to 0.025% in consideration of the amount of sulfur (S) to be inevitably added.

An austenite-based steel sheet according to an aspect of the present disclosure may include other Fe and other inevitable impurities in addition to the above-described components. In a typical manufacturing process, unintended impurities from raw materials or surrounding environment may be inevitably mixed, and thus this may not be entirely excluded. Since all of these impurities may be known to anyone skilled in the art, all of the contents may not be specifically mentioned in the present specification. In addition, additional components effective in addition to the above-described components may not be entirely excluded.

An austenite-based steel sheet according to an aspect of the present disclosure may include austenite as a matrix structure. A fraction of the austenite may be 80% by area or more, and a case in which the fraction of the austenite is 90% by area or more may be included. An average grain size of the austenite may be 60 um or less. An austenite-based steel sheet according to an aspect of the present disclosure not only may include austenite as a matrix structure, but also limits an average grain size of the austenite to a certain level or less, thereby effectively securing desired wear resistance, strength, and low temperature toughness. The present disclosure may not entirely exclude formation of other tissues inevitably formed in addition to the austenite, and other residual tissues including precipitates such as carbides or the like may be included in a range of 20% by area or less.

An austenite-based steel sheet according to an aspect of the present disclosure may include a twin of 20% by area or less, and an average size of the twin may be 400 nm or less. When a certain fraction of the twin is included, wear resistance may be effectively improved through twin-induced hardening and tissue refinement by recrystallization. When a fraction of the twin reaches a certain range, the effects may be saturated, and thus the present disclosure may limit the fraction of the twin to a range of 20% by area or less. As an average size of the twin increases, an orientation disorder of a texture increases, and thus the average size of the twin may be limited to 400 nm or less.

Surface hardness (Hv) of an austenite-based steel sheet according to an aspect of the present disclosure may satisfy the following relational expression 1: 18.7*[Mn] - 10.3*[Cr] + 1.7*[C] ≤ Surface Hardness (Hv) ≤ 22.1*[Mn] + 18.3*[Cr] + 2.4*[C]

In the above Relational expression 1, [Mn], [Cr], and [C] are amounts (% by weight) of Mn, Cr, and C, included in the steel sheet, respectively, and, when a component thereamong is not included, brackets including the component are substituted with zero (0).

An austenite-based steel sheet according to an aspect of the present disclosure may have a tensile strength of 800 MPa or more, and a temperature at which a shear area of a DWTT test is 85% or more may be -25°C or less.

Hereinafter, a bevel for manufacturing an austenite-based steel sheet according to the present disclosure will be described in more detail.

A method for manufacturing an austenite-based steel sheet according to an aspect of the present disclosure may include heating a slab including, by weight, C: 0.5 to 1.2%, Si: 0.1 to 1.0%, Mn: 12 to 28%, Cr: 6.0% or less (including 0%), P: 0.025% or less, S: 0.025% or less, a balance of Fe, and inevitable impurities, for 180 to 320 minutes at a temperature range of 1100 to 1250°C; hot-rolling the heated slab at a finish rolling temperature of 800°C or more to provide a hot-rolled material; and cooling the hot-rolled material to room temperature at a cooling rate of 15°C/s or more to provide a final material.

### Slab Heating

Since the slab provided in the manufacturing method of the present disclosure corresponds to a steel composition of the austenite-based steel sheet described above, description of a steel composition of the slab may be replaced by description of the steel composition of the austenite-based steel sheet described above.

The slab provided with the above-described steel composition may be heated in a temperature range of 1100 to 1250°C. When the heating temperature is less than a certain range, a problem of applying an excessive rolling load during hot-rolling may occur, or a problem of not sufficiently dissolving an alloy component may occur. Therefore, a lower limit of the slab heating temperature is limited to 1100°C. When the heating temperature exceeds a certain range, a crystal grain may grow excessively and strength may decrease, or a hot-rolling property may deteriorate in excess of a solidus line temperature of the steel. Therefore, an upper limit of the slab heating temperature is limited to 1250°C.

### Hot-Rolling

The hot-rolling process may include a coarse rolling process and a finish rolling process, and the heated slab may be hot-rolled to be provided as a hot-rolled material. In this case, it may be performed in a temperature range of 800°C or more in finish hot-rolling. When a finish hot-rolling temperature is excessively low, the finish hot-rolling temperature is limited to a range of 800°C or more because there may be a concern about an excessive rolling load. In addition, an upper limit of the finish hot-rolling temperature is not particularly limited, but the upper limit may be limited to 950°C to prevent excessive growth of crystal grains. A thickness of the hot-rolled material completed is not particularly limited, but as a non-limiting example, the thickness of the hot-rolled material may satisfy a range of 6 to 30 mm.

### Cooling

The hot-rolled material may be cooled to room temperature at a cooling rate of 15°C/s or more. When the cooling rate is less than a certain range, ductility of the steel material may be reduced due to a carbide deposited on a grain boundary during cooling, and thus deterioration of wear resistance may be problematic, and thus the cooling rate of the hot-rolled material is limited to a range of 15°C/s or more. The faster the cooling rate, the more advantageous it is to suppress carbide precipitation, but in a typical cooling rate exceeding 100°C/s may be difficult to implement due to characteristics of a facility, and thus an upper limit of the cooling rate is limited to 100°C/s. The cooling method is not particularly limited, but accelerated cooling may be applied.

An austenite-based steel sheet manufactured by the above-described manufacturing method may include austenite having an average grain size of 60 um or less in 80% by area or more, and a twin having an average grain size of 400 nm or less in 20% by area or less.

In addition, the austenite-based steel sheet manufactured by the above-described manufacturing method may have a tensile strength of 800 MPa or more, and a temperature at which a shear area of a DWTT test is 85% or more may be -25°C or less, and surface hardness (Hv) may satisfy the following relational expression 1: 18.7*[Mn] - 10.3*[Cr] + 1.7*[C] ≤ Surface Hardness (Hv) ≤ 22.1*[Mn] + 18.3*[Cr] + 2.4*[C]

In the above Relational expression 1, [Mn], [Cr], and [C] are amounts (% by weight) of Mn, Cr, and C, included in the steel sheet, respectively, and, when a component thereamong is not included, brackets including the component are substituted with zero (0).

Hereinafter, a method for manufacturing a welded steel pipe having superior wear resistance according to an aspect of the present disclosure will be described in more detail.

According to an aspect of the present disclosure, a method for manufacturing a welded steel pipe having superior wear resistance may include cutting a prepared austenite-based steel sheet; beveling both end portions of a cut austenite-based steel sheet; molding a beveled austenite-based steel sheet to have a tubular shape such that both beveled end portions form a butted portion; and welding the butted portion to provide the welded steel pipe.

### Preparation and Cutting of Steel Sheet

The above-described austenite-based steel sheet may be prepared and cut to have required dimensions. The dimensions and cutting method of the steel sheet is not particularly limited, and conditions applied to manufacture of a conventional welded steel pipe may be applied.

### Beveling

Both ends of the cut austenite-based steel sheet may be beveled. In an austenite-based steel sheet having a component system of the present disclosure, since weld penetration may be shallow to form a non-melted region in a welded portion, to occur bonding, and occurrence of such a non-melted region may be effectively prevented by beveling both ends of the steel sheet. A type of beveling is not particularly limited, and either X type groove beveling or Y type groove beveling may be applied. The beveling applied to the present disclosure is not particularly limited, and a beveling suitable for the manufacture of a conventional welded steel pipe may be applied.

### Molding

The beveled austenite-based steel sheet may be molded to have a tubular shape such that a beveled both ends forms a butted portion. In the present disclosure, a process of molding the beveled austenite-based steel sheet to have a tubular shape is not particularly limited. A molding process commonly applied when manufacturing a welded steel pipe may be applied, and any one molding process selected from a spiral molding process, a UOE press process, a roll bending process, and a JCO molding process may be applied. In addition, a shape of the welded steel pipe to be formed is also not particularly limited, and may be formed in various shapes such as a square tube, a circular tube, or the like.

### Welding

After molding the austenite-based steel sheet, the welded steel pipe may be provided by welding the butted portion. The welding process applied in the present disclosure is not particularly limited, and any welding process generally applied when manufacturing the welded steel pipe may be applied without limitation. It may be interpreted that at least one arc welding process selected from a shield metal arc welding (SMAW) process, a gas metal arc welding (GMAW) process, a gas tungsten arc welding (GTAW) process, a flux coated arc welding (FCAW) process, and a sub-merged arc welding (SAW) process, or an electric resistance welding (ERW) process may be applied, and one or more selected from thereamong may be selectively combined and applied to welding.

In addition, the inventor of the present disclosure confirmed that a welding heat input amount applied during welding is a factor that has a major influence on whether or not high-temperature cracks are generated in the welded portion, when welding is performed using a steel sheet that satisfies a component system limited by the present disclosure, and derived the present disclosure. That is, in a method for manufacturing a welded steel pipe according to an aspect of the present disclosure, a welding heat input amount applied during welding of an austenite-based steel sheet may be controlled to be within a range of 4.3 kJ/mm or less, such that high-temperature cracks generated in the welding line may be effectively suppressed. A preferred welding heat input amount is 4.2 kJ/mm or less, and a more preferred welding heat input amount is 4.1 kJ/mm or less.

Hereinafter, a welded steel pipe for delivering a slurry, according to an aspect of the present disclosure, will be described in more detail.

An austenite-based welded steel pipe according to an aspect of the present disclosure may include a welded steel pipe base material portion in which austenite is a base structure, and a welded portion connecting both ends of the welded steel pipe base material portion to each other.

Since the welded steel pipe base material of the present disclosure has a steel composition and a microstructure corresponding to the austenite-based steel sheet described above, a temperature at which a tensile strength is 800 MPa or more and a shear area of a DWTT test is 85% or more may be -25°C or less, and surface hardness (Hv) may satisfy the following relational expression 1: 18.7*[Mn] - 10.3*[Cr] + 1.7*[C] ≤ Surface Hardness (Hv) ≤ 22.1*[Mn] + 18.3*[Cr] + 2.4*[C]

In the above Relational expression 1, [Mn], [Cr], and [C] are amounts (% by weight) of Mn, Cr, and C, included in the welded steel tube base material, respectively, and, when a component thereamong is not included, brackets including the component are substituted with zero (0).

Since the welded portion of the present disclosure may be formed by applying a heat input amount of 4.3 kJ/mm or less, it may be possible to suppress occurrence of high-temperature cracks in the welded portion as much as possible. That is, formation of high-temperature cracks on a melting line may be suppressed as possible, and even when high-temperature cracks occur, a maximum crack length of the high-temperature cracks may be suppressed to a level of 0.5 mm or less.

Therefore, a welded steel pipe for delivering a slurry according to an aspect of the present disclosure not only has superior wear resistance and low temperature toughness, but also minimizes formation of high-temperature cracks in a welded portion, to provide particularly suitable physical properties for delivering the slurry.

Hereinafter, a welded steel pipe for delivering a slurry and a method for manufacturing the same, according to an aspect of the present disclosure, will be described in more detail with reference to specific embodiments. The following embodiments may be for understanding the present disclosure, and may not be intended to specify the scope of the present disclosure. The scope of the present disclosure may be determined by matters described in the claims and matters reasonably inferred therefrom.

### Mode for Invention

### (Example 1)

After preparing a slab having an alloy component described in Table 1 below, each specimen was prepared by applying the above-described process conditions.

**[Table 1]**

| Steel | Alloy Component (wt%) | | | | | |
|---|---|---|---|---|---|---|
| | C | Si | Mn | Cr | P | S |
| A | 0.9 | 0.3 | 17 | 4 | 0.001 | 0.0008 |
| B | 1.1 | 0.2 | 18 | 2 | 0.001 | 0.0008 |
| C | 0.6 | 0.3 | 18 | 5 | 0.001 | 0.0008 |

After cutting each specimen, a mirror surface was prepared, and was corroded using a 2 vol% nital etching solution, a microstructure was observed using an optical microscope and an electron scanning microscope, and results therefrom were shown in Table 2. Tensile tests were performed on each specimen using a tensile tester, and results therefrom were shown in Table 2. A shear area was measured after fracturing the specimen using a DWTT tester while lowering a temperature using liquid nitrogen, and a DWTT temperature was measured based on a shear area of 85%, and were shown in Table 2.

**[Table 2]**

| Specimen No. | Steel | Microstructure | | | | Tensile Strength (MPa) | 85% Shear Area, DWTT Temp. (°C) |
|---|---|---|---|---|---|---|---|
| | | γ Fraction (area%) | γ Average Grain Size (µm) | Twin Fraction (area%) | Twin Average Size (nm) | | |
| 1 | A | 92 | 22 | 15 | 330 | 930 | -110 |
| 2 | B | 95 | 28 | 18 | 350 | 990 | -100 |
| 3 | C | 85 | 24 | 13 | 305 | 880 | -100 |

### (Example 2)

After X type groove beveling was performed on a specimen of steel A, molding and sub-merged arc welding (SAW) were performed to prepare a welding test piece 1. As a result of observing a cross-section of a welded portion of the welding test piece 1 using the optical microscope and the scanning electron microscope, no cracking was found. A welding test piece 2 was prepared by performing molding and sub-merged arc welding (SAW) without performing beveling on the specimen of steel A, and as a result of observing a cross-section of a welded portion of welding test piece 2 using the optical microscope and the scanning electron microscope, it was confirmed that cracks occurred locally. Therefore, a welded steel pipe manufactured by a manufacturing method of the present disclosure may secure superior properties of the welded portion.

### (Example 3)

After welding was performed on the specimen of steel A under the following welding conditions, occurrence of high-temperature cracks in a welded portion was evaluated using the optical microscope.

A welding test piece 3 was prepared by performing sub-merged arc welding (SAW) with a heat input amount of 4.4 kJ/mm using 790A*38V, and a high-temperature crack with a maximum crack length exceeding 0.5mm was confirmed in a welded portion of the welding test piece 3. A welding test piece 4 was prepared by performing sub-merged arc welding (SAW) with a heat input amount of 3.5kJ/mm using 650A*35V, and high-temperature cracks with a maximum crack length exceeding 0.5mm were not found in a welded portion of the welding test piece 4. Therefore, it can be seen that, in a welded steel pipe according to an aspect of the present disclosure, occurrence of cracks in a welded portion was effectively suppressed.

Although the present disclosure has been described in detail through embodiments above, other types of embodiments are possible. Therefore, the technical idea and scope of the claims described below are not limited to embodiments.

## Claims

1. A method for manufacturing a welded steel pipe having superior wear resistance, comprising:
cutting a prepared austenite-based steel sheet;
beveling both end portions of a cut austenite-based steel sheet;
molding a beveled austenite-based steel sheet to have a tubular shape such that both beveled end portions form a butted portion; and
welding the butted portion to provide the welded steel pipe.

2. The method of claim 1, wherein the austenite-based steel sheet comprises, by weight, C: 0.5 to 1.2%, Si: 0.1 to 1.0%, Mn: 12 to 28%, Cr: 6.0% or less (including 0%), P: 0.025% or less, S: 0.025% or less, a balance of Fe, and inevitable impurities,
wherein surface hardness of the austenite-based steel sheet satisfies the following relation 1: 18.7*[Mn] - 10.3*[Cr] + 1.7*[C] ≤ Surface Hardness (Hv) ≤ 22.1*[Mn] + 18.3*[Cr] + 2.4*[C] where, [Mn], [Cr], and [C] are amounts (% by weight) of Mn, Cr, and C, included in the steel sheet, respectively, and, when a component thereamong is not included, brackets including the component are substituted with zero (0).

3. The method of claim 1, wherein the austenite-based steel sheet comprises austenite having 80% by area or more as a microstructure, and
wherein an average grain size of the austenite is 60 um or less.

4. The method of claim 1, wherein the austenite-based steel sheet comprises a twin of 20% by area or less, and
wherein an average size of the twin is 400 nm or less.

5. The method of manufacturing a welded steel pipe for delivering a slurry of claim 1, wherein molding method of a austenite-based steel sheet is one selected from a spiral molding process, a UOE press process, a roll bending process, and a JCO molding process.

6. The method of manufacturing a welded steel pipe for delivering a slurry of claim 1, wherein welding method of the butted portion is at least one arc welding process selected from a shield metal arc welding (SMAW) process, a gas metal arc welding (GMAW) process, a gas tungsten arc welding (GTAW) process, a flux coated arc welding (FCAW) process, and a sub-merged arc welding (SAW) process, or
an electric resistance welding (ERW) process.

7. The method of manufacturing a welded steel pipe for delivering a slurry of claim 1, wherein the butted portion is welded with a heat input amount of 4.3kJ/mm or less.
